# EUROPÄISCHE PATENTSCHRIFT

(11) **EP 1 702 145 B1**
(45) Veröffentlichungstag und Bekanntmachung des Hinweises auf die Patenterteilung: **04.07.2007**
(21) Anmeldenummer: 04817568.1
(22) Anmeldetag: 08.12.2004
(51) Int. Cl.: F01N 3/20, F01N 3/029, F01N 11/00

(54) **VERFAHREN ZUM BETREIBEN EINES DOSIERVENTILS UND VORRICHTUNG ZUR DURCHFÜHRUNG DES VERFAHRENS**
METHOD FOR OPERATING A DOSING VALVE AND DEVICE FOR CARRYING OUT SAID METHOD
PROCEDE DE FONCTIONNEMENT D'UNE VALVE DE DOSAGE ET DISPOSITIF CORRESPONDANT

(30) Priorität: 19.12.2003 DE 10360891
(43) Veröffentlichungstag der Anmeldung: 20.09.2006
(73) Patentinhaber: ROBERT BOSCH GMBH, 70442 Stuttgart (DE)
(72) Erfinder: GERLACH, Michael, 71336 Waiblingen-Neustadt (DE)
(86) Internationale Anmeldenummer: PCT/EP2004/053336
(87) Internationale Veröffentlichungsnummer: WO 2005/061866

(56) Entgegenhaltungen:
- EP-A- 1 176 295
- US-A- 5 709 080
- US-A1- 2003 033 799
- US-B1- 6 209 315
- PATENT ABSTRACTS OF JAPAN Bd. 2002, Nr. 09, 4. September 2002 (2002-09-04) & JP 2002 147223 A (TOYOTA MOTOR CORP; DENSO CORP), 22. Mai 2002 (2002-05-22)

## Beschreibung

### Stand der Technik

Die Erfindung geht aus von einem Verfahren zum Betreiben eines Dosierventils und einer Vorrichtung zur Durchführung des Verfahrens nach der Gattung der unabhängigen Ansprüche.

Aus der DE 101 39 142 A1 ist eine Abgasnachbehandlungseinheit einer Brennkraftmaschine bekannt geworden, bei der die Konzentration einer Harnstoff-Wasser-Lösung in einem Tank ermittelt wird, um eine exakte Dosierung der Harnstoff-Wasser-Lösung in den Abgasbereich der Brennkraftmaschine zu ermöglichen. Die Harnstoff-Wasser-Lösung ist ein Reagenzmittel, welches in einem SCR-Katalysator als Reduktionsmittel für die im Abgas der Brennkraftmaschine enthaltenen Stickoxide wirkt. In einer ersten Reaktionsstufe wird der in der Hamstoff-Wasser-Lösung enthaltene Harnstoff mit Wasser zu Ammoniak und Kohlendioxid umgesetzt (hydrolysiert). In einer zweiten Reaktionsstufe werden NO und NO2 mittels Ammoniak in Stickstoff und Wasser umgesetzt. Die Durchflussrate der Harnstoff-Wasser-Lösung wird mit einem Dosierventil eingestellt, die weder eine untere noch eine obere Grenze überschreiten darf. Bei einem Unterschreiten der unteren Grenze ist der SCR-Katalysator wirkungslos und bei Überschreiten der oberen Grenze tritt ein Ammoniak-Durchbruch auf.

Die US 6209315 B1 beschreibt ein Verfahren gemäß dem Oberbegriff von Anspruch 1.

Der Erfindung liegt die Aufgabe zugrunde, ein Verfahren zum Betreiben eines Dosierventils und eine Vorrichtung zur Durchführung des Verfahrens anzugeben, welche die Einhaltung einer vorgegebenen Durchflussrate eines in einen Abgasbereich einer Brennkraftmaschine einzubringenden Reagenzmittels ermöglichen.

Die Aufgabe wird durch die in den unabhängigen Ansprüchen angegebenen Merkmale jeweils gelöst.

### Vorteile der Erfindung

Eine erfindungsgemäße Vorgehensweise sieht eine Bewertung eines Maßes für die Durchflussmenge eines Reagenzmittels durch das Dosierventil während einer Messzeit in Rahmen einer Diagnose vor. Die erfindungsgemäße Vorgehensweise stellt die Genauigkeit der Zumessung des Reagenzmittels in den Abgasbereich einer Brennkraftmaschine über die gesamte Einsatzzeit des Dosierventils sicher. Die Diagnose trägt somit dazu bei, dass die Abgasgrenzwerte während der gesamten Betriebsdauer der Brennkraftmaschine eingehalten werden.

Vorteilhafte Ausgestaltungen und Weiterbildungen der erfindungsgemäßen Vorgehensweise ergeben sich aus abhängigen Ansprüchen.

Eine erste Ausgestaltung sieht vor, dass die Diagnose mit einem Startsignal ausgelöst wird, das ein Diagnosegerät bereitstellt. Die erste Ausgestaltung eignet sich zur Durchführung der Diagnose im Rahmen einer Inspektion der Brennkraftmaschine, die beispielsweise in einer Kraftfahrzeugwerkstatt stattfinden kann. Das Maß für die Durchflussmenge wird während einer vorgegebenen Messzeit ermittelt, in welcher das Reagenzmittel in einem Messbecher aufgefangen wird. Anhand eines Vergleichs mit einem Referenzwert, der beispielsweise im Neuzustand des Dosierventils ermittelt und in einem Speicher eines Steuergerät abgelegt wurde, kann entschieden werden, ob die Berücksichtigung eines Abgleichwerts ausreicht oder ein Austausch des Dosierventils erforderlich ist.

Eine andere Ausgestaltung sieht vor, dass als Maß für die Durchflussmenge durch das Dosierventil eine Druckdifferenz herangezogen wird. Mit dieser Maßnahme kann die Diagnose sowohl während des Stillstands als auch während des Betriebs der Brennkraftmaschine unabhängig von einem Werkstattaufenthalt durchgeführt werden. Eine Ausgestaltung der Diagnose sieht vor, dass nach dem Auftreten eines Diagnose-Startsignals das Reagenzmittel bei geschlossenem Dosierventil mittels einer Pumpe auf einen vorgegebenen Startdruck gebracht wird, dass anschließend das Dosierventil auf eine vorgegebene Durchflussrate eingestellt wird und dass die während der Messzeit durch den Druckabfall entstehende Druckdifferenz bewertet wird.

Eine Ausgestaltung des Verfahrens sieht vor, dass die Druckdifferenz fest vorgegeben ist und dass ein Warnsignal bereitgestellt wird, wenn die Messzeit einen vorgegebenen Diagnosezeit-Grenzwert überschreitet. Eine alternative Ausgestaltung sieht vor, dass die Diagnosezeit fest vorgegeben ist und dass ein Warnsignal bereitgestellt wird, wenn die Druckdifferenz einen vorgegebenen Druckdifferenz-Grenzwert überschreitet.

Die erfindungsgemäße Vorgehensweise kann dazu herangezogen werden, ein von einer Dosiersteuerung an das Dosierventil abzugebendes Dosiersignal in Abhängigkeit vom Diagnoseergebnis zu adaptieren. Ein Verschleiß des Dosierventils kann mit dieser Maßnahme innerhalb gewisser Grenzen ausgeglichen werden, sodass ein Austausch des Dosierventils hinausgezögert werden kann.

Die Diagnose kann beispielsweise mit einem von einer Brennkraftmaschinen-Steuerung bereitgestellten Diagnose-Startsignal eingeleitet werden. Vorteilhafterweise ist eine Nachlaufsteuerung vorgesehen, die nach dem Abschalten der Brennkraftmaschine ein Diagnose-Startsignal bereitstellt, sodass die Diagnose unabhängig vom Betrieb der Brennkraftmaschine stattfinden kann. Das Diagnose-Startsignal kann weiterhin insbesondere von einem Gefrierzyklenzähler bereitgestellt werden, der die Anzahl der Gefriervorgänge des Systems, insbesondere die des Dosierventils zählt. Die Diagnose kann daher insbesondere nach einem für das Dosierventil kritischen Einfrieren des Reagenzmittels durchgeführt werden.

Weitere vorteilhafte Weiterbildungen und Ausgestaltungen der erfindungsgemäßen Vorgehensweise ergeben sich aus weiteren abhängigen Ansprüchen und aus der folgenden Beschreibung.

### Zeichnung

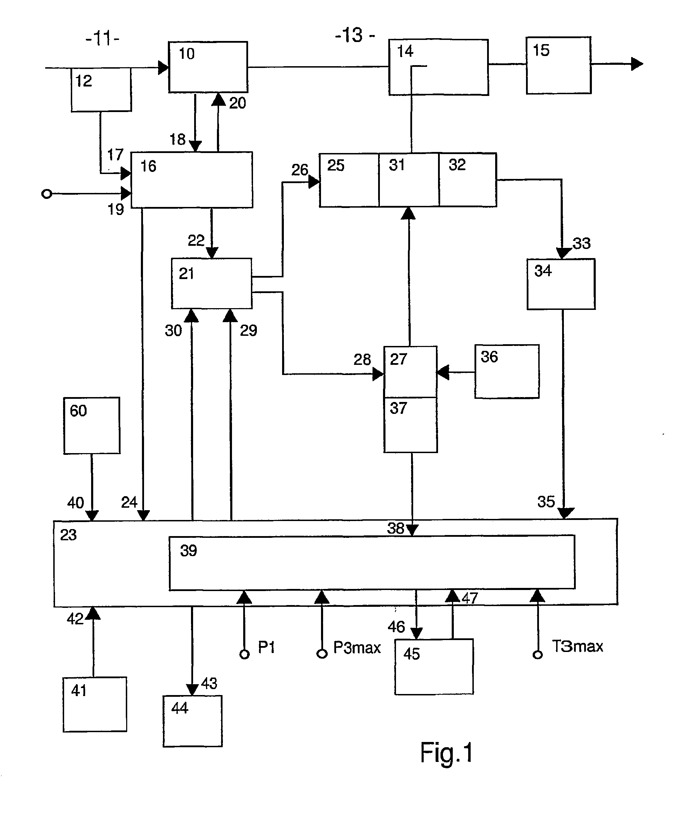

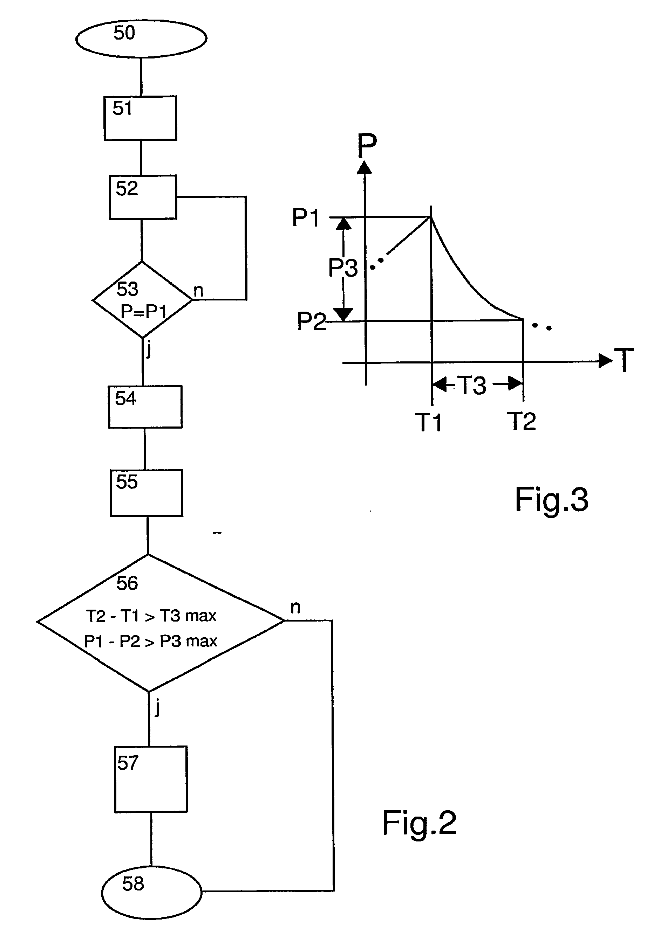

Figur 1 zeigt eine Brennkraftmaschine, in deren Umfeld ein erfindungsgemäßes Verfahren zur Diagnose eines Dosierventils abläuft, Figur 2 zeigt ein Flussdiagramm eines Verfahrens und Figur 3 zeigt einen zeitlichen Druckverlauf.

Figur 1 zeigt eine Brennkraftmaschine 10, in deren Ansaugbereich 11 ein Luftsensor 12 und in deren Abgasbereich 13 eine Dosiereinrichtung 14 und ein. Abgasreiniger 15 angeordnet sind. Der Luftsensor 12 gibt an eine Brennkrafunasctunen-Steuerung 16 ein Luftsensorsignal 17 ab. Die Brennlaaflmaschinen-Steuerung 16 erhält weiterhin ein von der Brennkraftmaschine 10 bereitgestelltes Drehzahlsignal 18 sowie ein Sollsignal 19 zugeführt.

Die Brennkraftmaschinen-Steuerung 16 gibt an die Brennkraftmaschine 10 ein Kraftstoffsignal 20, an eine Dosiersteuerung 21 ein Dosiersignal 22 sowie an eine Diagnosesteuerung 23 ein erstes Diagnose-Startsignal 24 ab.

Die Dosiersteuerung 21 gibt an eine Dosierventil-Ansteuerung 25 ein Dosierventil-Signal 26 und an eine Pumpe 27 ein Pumpensignal 28 ab. Die Dosiersteuerung 21 erhält von der Diagnosesteuerung 23 sowohl ein Diagnosesignal 29 als auch ein Korrektursignal 30 zugeführt.

Die Dosierventil-Ansteuerung 25 ist einem Dosierventil 31 zugeordnet, das sowohl mit der Dosiereinrichtung 14 als auch mit der Pumpe 27 verbunden ist. Dem Dosierventil 31 ist ein Temperatursensor 32 zugeordnet, der ein Temperatursignal 33 an einen Gefrierzyklenzähler 34 abgibt. Der Gefrierzyklenzähler 34 gibt ein zweites Diagnose-Startsignal 35 an die Diagnosesteuerung 23 ab.

Die Pumpe 27 ist mit einem Reagenztank 36 verbunden. Der Pumpe 27 ist ein Drucksensor 37 zugeordnet, der ein Drucksignal 38 an eine Signalbewertung 39 abgibt.

Die Signalbewertung 39 ist in der Diagnosesteuerung 23 enthalten. Der Diagnosesteuerung 23 wird weiterhin von einer Nachlaufsteuerung 60 ein drittes Diagnose-Startsignal 40 sowie von einem Diagnosegerät 41 ein viertes Diagnose-Startsignal 42 zugeführt.

Die Signalbewertung 39 gibt ein Warnsignal 43 an eine Signaleinrichtung 44 ab. Zugeführt erhält die Signalbewertung 39 einen Diagnose-Startdruck P1, einen Druckdifferenz-Grenzwert P3max für sowie einen Diagnosezeit-Grenzwert T3max. Ein Zeitgeber 45 erhält von der Signalbewertung 39 ein Zeitgeber-Startsignal 46 zugeführt und gibt an die Signalbewertung 39 ein Zeitsignal 47 ab.

Figur 2 zeigt ein Ablaufdiagramm des erfindungsgemäßen Verfahrens. Nach einem Start 50 wird in einem ersten Funktionsblock 51 das Dosierventil 31 geschlossen. In einem zweiten Funktionsblock 52 wird die Pumpe 27 eingeschaltet. In einer ersten Abfrage 53 wird ermittelt, ob der Diagnose-Startdruck P1 erreicht ist. Falls dies der Fall ist, wird in einem dritten Funktionsblock 54 die Pumpe 27 abgeschaltet. Danach wird in einem vierten Funktionsblock 55 das Dosierventil 27 mit einem vorgegebenen Querschnitt geöffnet. In einer zweiten Abfrage 56 wird entweder festgestellt, ob eine Diagnosezeit T den Diagnosezeit-Grenzwert T3max oder ein Druck P den Druckdifferenz-Grenzwert P3max überschritten hat. Falls dies der Fall ist, wird in einen fünften Funktionsblock 57 das Warnsignal 43 bereitgestellt. Danach ist das Diagnoseende 58 erreicht.

Figur 3 zeigt einen Verlauf des Drucks P in Abhängigkeit von der Zeit T. In einem Zeitbereich vor einem Diagnose-Startzeitpunkt T1 steigt der Druck P an, bis zum Diagnose-Startzeitpunkt T1 der Diagnose-Startdruck P1 erreicht ist. Während einer Diagnosezeit T3 fällt der Druck P auf einen Diagnose-Enddruck P2 ab. Zwischen dem Diagnose-Startdruck P1 und dem Diagnose-Enddruck P2 tritt eine Druckdifferenz P3 auf.

### Das erfindungsgemäße Verfahren arbeitet folgendermaßen:

Der Abgasreiniger 15, der im Abgasbereich 13 der Brennkraftmaschine 10 angeordnet ist, vermindert wenigstens eine Abgaskomponente wie beispielsweise Ruß oder Stickoxide. Der Abgasreiniger 15 kann daher beispielsweise als Filter oder als Katalysator ausgestaltet sein. Im Folgenden wird davon ausgegangen, dass der Abgasreiniger 15 zur Verminderung von Stickoxiden vorgesehen und als SCR-Katalysator (selektive katalytische Reaktion) ausgestaltet ist. Bei dem aus dem Stand der Technik bekannten SCR-Katalysator wird als Reagenzmittel eine Harnstoff-Wasser-Lösung benötigt, die im Reagenztank 36 gelagert ist.

Die Harnstoff-Wasser-Lösung ist ein Reagenzmittel, welches in einem SCR-Katalysator als Reduktionsmittel für die im Abgas der Brennkraftmaschine enthaltenen Stickoxide wirkt. In einer ersten Reaktionsstufe wird der in der Hamstoff-Wasser-Lösung enthaltene Harnstoff mit Wasser zu Ammoniak und Kohlendioxid umgesetzt (hydrolysiert) und in einer zweiten Reaktionsstufe wird NO und NO2 mittels Ammoniak schließlich zu Stickstoff und Wasser konvertiert. Die Konzentration der Harnstoff-Wasser-Lösung im Abgas darf weder eine untere noch eine obere Grenze überschreiten. Bei Unterschreiten der unteren Grenze ist der SCR-Katalysator wirkungslos und bei Überschreiten der oberen Grenze tritt ein Ammoniak-Durchbruch auf

Zum Einstellen der Durchflussrate bzw. der Durchflussmenge pro Zeiteinheit ist zum einen die Pumpe 27 und zum anderen das Dosierventil 31 vorgesehen. Die Pumpe 27 bringt die Harnstoff-Wasser-Lösung auf einen vorgegebenen Druck und das Dosierventil 31 wird von der Dosierventil-Ansteuerung 25 auf einen vorgegebenen Durchflussquerschnitt eingestellt.

Die vorzugebende Durchflussrate hängt von der Konzentration der Stickoxide und vom Abgasmassenstrom im Abgasbereich 13 der Brennkraftmaschine 10 ab. Die Brennkraftmaschinen-Steuerung 16 kann diese Werte beispielsweise anhand des Luftsensorsignals 17 und/oder des Kraftstoffsignals 20 abschätzen. Gegebenenfalls kann das Drehzahlsignal 18 berücksichtigt werden. Weiterhin kann das Sollsignal 19 einbezogen werden, welches einen Drehmomentwunsch repräsentiert. Die Brennkraftmaschinen-Steuerung 16 legt das an die Dosiersteuerung 21 abzugebende Dosiersignal 22 entsprechend fest. Die Dosiersteuerung 21 ermittelt das Dosierventil-Signal 26, das der Dosierventil-Ansteuerung 25 die Information gibt, wieweit das Dosierventil 31 zu öffnen ist. Die Dosiersteuerung 21 steuert weiterhin mit dem Pumpensignal 28 die Pumpe 27 an.

Das Dosierventil 31 ist einem Verschleiß durch Alterung unterworfen. Das Dosierventil 31 kann mechanischen Belastungen ausgesetzt sein, die insbesondere beim Einfrieren bzw. Auftauen des Reagenzmittels auftreten. Sofern als Reagenzmittel eine Harnstoff-Wasser-Lösung vorgesehen ist, liegt der Gefrierpunkt bei etwa - 11 °C. Zur Überprüfung des Dosierventils 31 ist deshalb eine Diagnose vorgesehen, welche die Diagnosesteuerung 23 durchführt.

Die Diagnose kann von der Brennkraftmaschinen-Steuerung 16 mit dem ersten Diagnose-Startsignal 24 ausgelöst werden. Das erste Diagnose-Startsignal 24 kann beispielsweise in einem Betriebszustand bereitgestellt werden, in welchem die Brennkraftmaschine 10 nur geringe Mengen Stickoxid erzeugt, wie beispielsweise im Leerlauf.

Eine besonders vorteilhafte Maßnahme sieht vor, dass die Anzahl der Einfriervorgänge des Dosierventils 31 vom Gefrierzyklenzähler 34 erfasst wird, der entweder nach jedem Gefrieren oder nach einer vorgegebenen Anzahl von Gefriervorgängen eine Diagnose mit dem zweiten Diagnose-Startsignal 35 veranlasst. Der Gefrierzyklenzähler 34 vergleicht die vom Temperatursensor 32 erfasste Temperatur des Dosierventils 31 mit einem vorgegebenen Schwellenwert, der dem Gefrierpunkt des Reagenzmittels entspricht.

Die Nachlaufsteuerung 60, die nach dem Abschalten der Brennkraftmaschine 10 noch aktiv ist, kann die Diagnose mit dem dritten Diagnose-Startsignal 40 veranlassen. Mit dieser Maßnahme ist es möglich, die Diagnose ohne Beeinflussung des Abgases der Brennkraftmaschine 10 durchführen zu können. Die Nachlaufsteuerung 60 ist vorzugsweise in der BrennkraRmaschinen-Steuerung 16 enthalten.

Die Diagnose des Dosierventils 31 kann auch im Rahmen eines Werkstattaufenthalts vorgesehen sein. Die Diagnose kann von einer Bedienperson mit dem Diagnosegerät 41 ausgelöst werden, welches das vierte Diagnose-Startsignal 42 an die Diagnosesteuerung 23 abgibt.

Der Diagnosevorgang wird anhand des in Figur 2 gezeigten Flussdiagramms und anhand des in Figur 3 gezeigten Verlaufs des Drucks P in Abhängigkeit von der Zeit T erläutert:

Der Start 50 wird erreicht durch das Auftreten des ersten, zweiten, dritten und/oder vierten Diagnose-Startsignals 24, 35, 40, 42. Im ersten Funktionsblock 51 wird das Diagnoseventil 31 geschlossen. Die Diagnosesteuerung 23 veranlasst das Schließen des Dosierventils 31 über das Diagnosesignal 29, das der Dosiersteuerung 21 zugeführt wird.

Im nachfolgenden zweiten Funktionsblock 52 wird die Pumpe 27 eingeschaltet. Dieser Vorgang wird ebenfalls durch das Auftreten des Diagnosesignals 29 veranlasst. Der in Figur 3 gezeigte Diagnose-Startzeitpunkt T1 wird erreicht, wenn in der ersten Abfrage 53 festgestellt wird, dass der Druck P den Diagnose-Startdruck P 1 erreicht hat. Der Diagnose-Startdruck P1 wird der Signalbewertung 39 als vorgegebener Schwellenwert zugeführt. Das Erreichen des Diagnose-Startdrucks P1 erfasst der Drucksensor 37, der das Drucksignal 38 an die Signalbewertung 39 abgibt. Wenn der Diagnose-Startdruck P 1 erreicht ist, wird im nachfolgenden dritten Funktionsblock 54 die Pumpe 27 abgeschaltet und im darauf folgenden vierten Funktionsblock 55 das Dosierventil 31 mit einem vorgegebenen Querschnitt geöffnet.

Nach dem Öffnen des Dosierventils 31 tritt in der zwischen dem Diagnose-Startzeitpunkt T1 und dem Diagnose-Endzeitpunkt T2 liegenden Diagnosezeit T3 ein Druckabfall auf, der durch die Druckdifferenz P3 gegeben ist. Zum Ermitteln der Diagnosezeit T3 ist der Zeitgeber 45 vorgesehen, der mit dem Zeitgeber-Startsignal 46 von der Signalbewertung 39 beim Erreichen des Diagnose-Startdrucks P1 zum Diagnose-Startzeitpunkt T1 gestartet wird. Der Zeitgeber 45 gibt die Diagnosezeit T3 mit dem Zeitsignal 47 an die Signalbewertung 39 zurück.

Als Maß für die Durchflussmenge wird die Druckdifferenz P3 herangezogen werden. Der Vorteil dieser Maßnahme liegt darin, dass kein Eingriff in die Vorrichtung erforderlich ist. Die Signalbewertung 39 kann die Diagnose auf zwei verschiedene Arten durchführen. Gemäß einem ersten Ausführungsbeispiel kann die Druckdifferenz P3 fest vorgegeben und die Diagnosezeit T3 mit dem vorgegebenen Diagnosezeit-Grenzwert T3max verglichen werden. Gemäß einem anderen Ausführungsbeispiel kann die Diagnosezeit T3 fest vorgegeben werden und die Druckdifferenz P3 mit dem vorgegebenen Druckdifferenz-Grenzwert P3max verglichen werden. Die Vergleiche werden in der zweiten Abfrage 56 durchgeführt. Falls der eine oder der andere Grenzwert T3max, P3max nicht überschritten wurde, wird unmittelbar zum Diagnoseende 58 gesprungen. Falls ein Grenzwert T3max, P3max überschritten wurde, wird zum fünften Funktionsblock 57 gesprungen, in welchem die Ausgabe des Warnsignals 43 veranlasst wird. Das Warnsignal 43 veranlasst die Signaleinrichtung 44 beispielsweise zur Abgabe eines akustischen und/oder optischen Signals, das eine Bedienperson darauf hinweist, den Service aufzusuchen, und das Dosierventil 31 zu überprüfen und gegebenenfalls austauschen zu lassen.

Eine zweckmäßige Ausgestaltung sieht vor, dass in Abhängigkeit vom Diagnoseergebnis das Korrektursignal 30 an die Dosiersteuerung 21 abgegeben wird. Das Korrektursignal 30 ermöglicht den Ausgleich von festgestellten Abweichungen der Durchflussrate des Dosierventils 31, die innerhalb der Toleranz vor Erreichen des Grenzwerts T3max, P3max liegen. Die Dosiersteuerung 21 kann bei der Ermittlung des Dosierventil-Signals 26 in Abhängigkeit vom Dosiersignal 22 das Korrektursignal 30 mitberücksichtigen und die Ansteuerung des Dosierventils 31 adaptiv korrigieren.

Die Diagnose kann im Rahmen eines Werkstattaufenthalts auch volumetrisch erfolgen. Die Diagnose wird in diesem Fall vom Diagnosegerät 41 mit dem vierten Diagnose-Startsignal 42 ausgelöst. Die während der Diagnosezeit T3 durch das Dosierventil 31 strömende Menge wird in einem Messbecher aufgefangen. Durch Vergleich der gesammelten Menge mit einem Referenzwert kann eine gegebenenfalls vorhandene Änderung ermittelt werden. Der Referenzwert kann beispielsweise im Neuzustand des Dosierventils 31 ermittelt und in einem Speicher der Brennkraftmaschinen-Steuerung 16 hinterlegt werden. Auch bei diesem Ausführungsbeispiel kann innerhalb vorgegebener Grenzen bei Abweichungen des Sollwertes vom Istwert durch einen manuellen Eingriff das Korrektursignal 30 bereitgestellt werden zur Adaption der Dosiermenge des Reagenzmittels. Überschreitet die Abweichung zwischen Soll-und Istwert einen vorgegebenen Grenzwert, muss das Dosierventil 31 gegebenenfalls ausgetauscht werden.

## Patentansprüche

1. Verfahren zum Betreiben eines Dosierventils (31), das eine Durchflussrate eines in einen Abgasbereich (13) einer Brennkraftmaschine (10) einzubringenden Reagenzmittels festlegt, bei welchem eine Diagnose des Dosierventils (31) vorgesehen ist, die eine Bewertung eines Maßes für die Durchflussmenge anhand einer Druckdifferenz (P3) während einer Diagnosezeit (T3) vorsieht, **dadurch gekennzeichnet, dass** nach dem Auftreten eines Diagnose-Startsignals (24, 3 5, 40, 42) bei geschlossenem Dosierventil (31) das Reagenzmittel auf einen vorgegebenen Diagnose-Startdruck (P 1) gebracht wird, dass anschließend das Dosierventil (31) auf eine vorgegebene Durchflussrate eingestellt wird und dass die während der Diagnosezeit (T3) auftretende Druckdifferenz (P3) bewertet wird.

2. Verfahren nach Anspruch 1, **dadurch gekennzeichnet, dass** die Diagnose mit einem Startsignal (24) gestartet wird, welches ein Diagnosegerät (41) auslöst, und dass die vom Dosierventil (31) während der Diagnosezeit (T3) in einen Messbecher abgegebene Menge des Reagenzmittels bewertet wird.

3. Verfahren nach Anspruch 1, **dadurch gekennzeichnet, dass** die Druckdifferenz (P3) fest vorgegeben ist und dass ein Warnsignal (43) bereitgestellt wird, wenn die Diagnosezeit (T3) einen vorgegebenen Diagnosezeit-Grenzwert (T3max) überschreitet.

4. Verfahren nach Anspruch 1, **dadurch gekennzeichnet, dass** die Diagnosezeit (T3) fest vorgegeben ist und dass ein Warnsignal (43) bereitgestellt wird, wenn die Druckdifferenz (P3) während der Diagnosezeit (T3) einen vorgegebenen Druckdifferenz-Grenzwert (P3max) überschreitet.

5. Verfahren nach Anspruch 1, **dadurch gekennzeichnet, dass** in Abhängigkeit vom ermittelten Maß für die Durchflussmenge eine Adaption eines von einer Dosiersteuerung (21) an das Dosierventil (31) abgegebenen Dosierventil-Signals (26) während des Dosierbetriebs vorgesehen ist.

6. Verfahren nach Anspruch 1, **dadurch gekennzeichnet, dass** in Abhängigkeit von der Druckdifferenz (P3) eine Adaption eines von einer Dosiersteuerung (21) an das Dosierventil (31) abgegebenen Dosierventil-Signals (26) während des Dosierbetriebs vorgesehen ist.

7. Verfahren nach Anspruch 1, **dadurch gekennzeichnet, dass** die Diagnose mit einem von einer Brennkraftmaschinen-Steuerung (16) bereitgestellten ersten Diagnose-Startsignal (24) und/oder mit einem von einem Gefrierzyklenzähler (34) bereitgestellten zweiten Diagnose-Startsignal (35) und/oder mit einem von einer Nachlaufsteuerung (60) bereitgestellten dritten Diagnose-Startsignal (40) und/oder mit einem von einem Diagnosegerät (41) bereitgestellten vierten Diagnose-Startsignal (42) gestartet wird.

8. Vorrichtung zum Betreiben eines Dosierventils (31), das eine Durchflussrate eines in einen Abgasbereich (13) einer Brennkraftmaschine (10) einzubringenden Reagenzmittels festlegt, bei welchem eine Diagnose des Dosierventils (31) vorgesehen ist, die eine Bewertung eines Maßes für die Durchflussmenge anhand einer Druckdifferenz (P3) während einer Diagnosezeit (T3) vorsieht, **dadurch gekennzeichnet, dass** eine Diagnosesteuerung (23) zur Durchführung des Verfahrens nach einem der vorhergehenden Ansprüche vorgesehen ist.

## Claims

1. Method for operating a metering valve (31) which defines a flow rate of a reagent which is to be introduced into an exhaust gas region (13) of an internal combustion engine (10), in which method there is provision for diagnostics, which evaluate a measure for the flow rate by reference to a pressure difference (P3) during a diagnostic time (T3), to be performed on the metering valve (31), **characterized in that** after the occurrence of a diagnostic starting signal (24, 35, 40, 42) when the metering valve (31) is closed, the reagent is placed at a predefined diagnostic starting pressure (P1), **in that** the metering valve (31) is subsequently set to a predefined flow rate, and **in that** the pressure difference (P3) which occurs during the diagnostic time (T3) is evaluated.

2. Method according to Claim 1, **characterized in that** the diagnostics are started with a starting signal (24) which triggers a diagnostic device (41), and **in that** the quantity of reagent which is output by the metering valve (31) into a measuring beaker during the diagnostic time (T3) is evaluated.

3. Method according to Claim 1, **characterized in that** the pressure difference (P3) is permanently predefined and **in that** a warning signal (43) is made available if the diagnostic time (T3) exceeds a predefined diagnostic time limiting value (T3max).

4. Method according to Claim 1, **characterized in that** the diagnostic time (T3) is permanently predefined and **in that** a warning signal (43) is made available if the pressure difference (P3) exceeds a predefined pressure difference limiting value (P3max) during the diagnostic time (T3).

5. Method according to Claim 1, **characterized in that** there is provision for a metering valve signal (26) which is output to the metering valve (31) by a metering controller (21) to be adapted during the metering operation as a function of the measure determined for the flow rate.

6. Method according to Claim 1, **characterized in that** there is provision for a metering valve signal (26) which is output to the metering valve (31) by a metering controller (21) during the metering operation to be adapted as a function of the pressure difference (P3).

7. Method according to Claim 1, **characterized in that** the diagnostics are started with a first diagnostic start signal (24) which is made available by an internal combustion engine controller (16) and/or with a second diagnostic start signal (35) which is made available by a freeze cycle counter (34) and/or with a third diagnostic start signal (40) which is made available by a run-on controller (60) and/or with a fourth diagnostic start signal (42) which is made available by a diagnostic device (41).

8. Device for operating a metering valve (31) which defines a flow rate of a reagent which is to be introduced into an exhaust gas region (13) of an internal combustion engine (10), in which method there is provision for diagnostics, which evaluate a measure for the flow rate by reference to a pressure difference (P3) during a diagnostic time (T3), to be performed on the metering valve (31), **characterized in that** a diagnostic controller (23) for carrying out the method according to one of the preceding claims is provided.

## Revendications

1. Procédé pour faire fonctionner une soupape de dosage (31) qui détermine le taux d'écoulement d'un agent réactif à introduire dans une zone de gaz d'échappement (13) d'un moteur à combustion interne (10), selon lequel un diagnostic de la soupape de dosage (31) prévoit une évaluation d'une mesure du débit d'écoulement à l'aide d'une différence de pression (P3) pendant un temps de diagnostic (T3),
**caractérisé en ce qu'**
après apparition d'un signal de démarrage de diagnostic (24, 35, 40, 42), quand la soupape de dosage (31) est fermée, l'agent réactif est soumis à une pression de démarrage de diagnostic (P1) prédéfinie, puis la soupape de dosage (31) est réglée à un taux d'écoulement prédéfini et la différence de pression (P3) qui s'établit pendant le temps de diagnostic (T3) est évaluée.

2. Procédé selon la revendication 1,
**caractérisé en ce que**
le diagnostic démarre par un signal de démarrage (24) qui déclenche un appareil de diagnostic (41) et la quantité d'agent réactif délivré dans un récipient de mesure par la soupape de dosage (31) pendant le temps de diagnostic (T3), est évalué.

3. Procédé selon la revendication 1,
**caractérisé en ce que**
la différence de pression (P3) est prédéfinie à une valeur fixe et un signal avertisseur (43) est mis à disposition pour se déclencher quand le temps de diagnostic (T3) dépasse une valeur limite de temps de diagnostic (T3 max).

4. Procédé selon la revendication 1,
**caractérisé en ce que**
la différence de pression (P3) est prédéfinie à une valeur fixe et un signal avertisseur (43) est mis à disposition pour se déclencher quand la différence de pression (P3) dépasse une valeur limite prédéfinie de différence de pression (P3 max) pendant le temps de diagnostic (T3).

5. Procédé selon la revendication 1,
**caractérisé en ce qu'**
en fonction de la mesure établie du débit d'écoulement, il est prévu une adaptation d'un signal (26) délivré à la soupape de dosage (31) par une commande de dosage (21) pendant le fonctionnement de la soupape.

6. Procédé selon la revendication 1,
**caractérisé en ce qu'**
en fonction de la différence de pression (P3), il est prévu une adaptation d'un signal (26) délivré à la soupape de dosage (31) par une commande de dosage (21) pendant le fonctionnement de la soupape.

7. Procédé selon la revendication 1,
**caractérisé en ce que**
le diagnostic démarre par un premier signal de démarrage de diagnostic (24) mis à disposition par une commande de moteur (16) et/ou par un second signal de démarrage de diagnostic (35) mis à disposition par un compteur de cycle de réfrigération (34) et/ou par un troisième signal de démarrage de diagnostic (40) mis à disposition par une commande d'asservissement (60) et/ou par un quatrième signal de démarrage de diagnostic (42) mis à disposition par un appareil de diagnostic (41).

8. Dispositif pour faire fonctionner une soupape de dosage (31) qui détermine le taux d'écoulement d'un agent réactif à introduire dans une zone de gaz d'échappement (13) d'un moteur à combustion interne (10), dans lequel un diagnostic de la soupape de dosage (31) prévoit une évaluation d'une mesure pour le débit d'écoulement à l'aide d'une différence de pression (P3) pendant un temps de diagnostic (T3),
**caractérisé en ce qu'**
une commande de diagnostic (23) met en oeuvre le procédé selon une des revendications précédentes.
